# EUROPÄISCHE PATENTSCHRIFT

(11) **EP 1 975 044 B1**
(45) Veröffentlichungstag und Bekanntmachung des Hinweises auf die Patenterteilung: **08.07.2009**
(21) Anmeldenummer: 08004772.3
(22) Anmeldetag: 14.03.2008
(51) Int. Cl.: B62D 33/02

(54) **Runge für Nutzfahrzeugaufbauten**
Stanchion for commercial vehicle superstructure
Rancher pour structure de véhicule utilitaire

(30) Priorität: 30.03.2007 DE 102007015331
(43) Veröffentlichungstag der Anmeldung: 01.10.2008
(73) Patentinhaber: F. HESTERBERG & SÖHNE GmbH & Co. KG, 58256 Ennepetal (DE)
(72) Erfinder: Tiedtke, Henning, 58256 Ennepetal (DE); Klein, Klaus-Jürgen, 58332 Schwelm (DE)
(74) Vertreter: Christophersen, Ulrich Rudolf

(56) Entgegenhaltungen:
- WO-A-83/01420
- WO-A-92/00868
- DE-U1- 9 308 102
- US-A- 3 558 182

## Beschreibung

Die Erfindung betrifft eine Runge für Nutzfahrzeugaufbauten, mit einem in einem Rungendrehlager verschwenkbaren und auf diese Weise nach unten abklappbaren Rungenkörper sowie mit einem oberhalb des Rungendrehlagers in Höhe des Fahrzeugladebodens befestigten Rungenhalter zum fahrzeugfesten Verriegeln des Rungenkörpers, wobei an dem Rungenhalter ein längsbeweglich in dem Rungenkörper geführter Riegel verriegelbar ist, und der Riegel mit einem gegen eine Schräge des Rungenhalters längsbeweglichen Keil versehen ist.

Derartige Rungen zur Verwendung bei Nutzfahrzeugaufbauten sind z.B. aus der WO 92/00868, der EP 0 556 169 A1 und der Gebrauchsmusterschrift DE 93 08 102 U1 bekannt. Bei der Rungenverriegelung nach der WO 92/00868 ist seitlich am Ladeboden des Fahrzeugs ein Rungenhalter mit mehreren, sich nach unten hin trapezförmig verjüngenden Riegeltaschen befestigt. Mittels in der Runge integrierter Hebelmechanismen lassen sich die in dem Grundkörper geführten Riegel mit dem Rungenhalter koppeln. Hierzu sind die Riegel als Keile gestaltet, welche bis zur spielfreien Anlage in die sich nach unten trapezförmig verjüngenden Riegeltaschen einfahren.

Im Praxiseinsatz müssen die Riegeltaschen in Verbindung mit den darin sitzenden Keilen die häufig erheblichen Kräfte auf die Runge aufnehmen. Dies gelingt, soweit die Keile und dementsprechend die sie aufnehmenden Riegeltaschen ausreichend lang gestaltet sind. Je länger jedoch diese Bauteile sind, desto länger fällt auch der für das vollständige Absenken der Keile erforderliche Vertikalweg aus. Dies ist solange nicht von Nachteil, wie seitlich an dem Ladeboden des Fahrzeugs eine ausreichende vertikale Bauhöhe für den Rungenhalter zur Verfügung steht. Steht hingegen, etwa bei Ladeböden mit geringer seitlicher Rahmenhöhe, für den Rungenhalter nur eine beschränkte vertikale Bauhöhe zur Verfügung, geht dies zu Lasten der Sicherheit und Stabilität der Rungenbefestigung.

Die **Aufgabe** der Erfindung ist daher die Schaffung einer Runge für Nutzfahrzeugaufbauten, welche sich auch dann ausreichend sicher und stabil am Fahrzeugladeboden verriegeln lässt, wenn dessen seitliche Rahmenhöhe gering ist.

Zur **Lösung** wird bei einer Runge für Nutzfahrzeugaufbauten mit den eingangs angegebenen Merkmalen vorgeschlagen, dass an dem Riegel und an dem Rungenhalter, räumlich getrennt von dem Keil und der Schräge, jeweils Formschlussflächen ausgebildet sind, die sich bei verriegelter Runge hintergreifen.

Infolge der erfindungsgemäßen Verteilung der an der Runge wirkenden Kräfte auf mehrere Abstützorte lässt sich die Runge auch ohne lange Keile und dementsprechend lange Verriegelungswege ausreichend sicher und stabil an dem Ladeboden befestigen. Ein Teil der auf die Runge wirkenden Kräfte wird dabei von Formschlusspaaren aufgenommen, die räumlich getrennt von dem Keil und der Schräge an dem Riegel und an dem Rungenhalter ausgebildet sind.

Von Vorteil ist ferner eine Ausgestaltung, bei der die Formschlussflächen tiefer an dem Riegel und dem Rungenhalter angeordnet sind, als der Keil und die Schräge. Dies führt zu einer günstigen Verteilung der an der Runge wirkenden Kräfte und Momente auf mehrere, vertikal zueinander beabstandete Abstützorte.

In Bezug auf die erfindungsgemäßen Formschlussflächen wird mit einer Ausgestaltung vorgeschlagen, dass erste Formschlussflächen ausschließlich auf der einen, und zweite Formschlussflächen ausschließlich auf der anderen Seite der Längsmittellinie des Rungenkörpers angeordnet sind. In diesem Falle ist ferner von Vorteil, wenn sich der Keil und die Schräge auf der Längsmittellinie und damit auf der Symmetrieachse der Runge befinden.

Eine weitere Ausgestaltung ist gekennzeichnet durch bei verriegelter Runge sich hintergreifende obere Formschlussflächen und bei verriegelter Runge sich hintergreifende untere Formschlussflächen, wobei obere und untere Formschlussflächen durch vertikale Freiräume räumlich voneinander getrennt sind. Auch dies ermöglicht eine günstige Abstützung der im Praxiseinsatz auf die Runge wirkenden Kräfte und Momente.

Mit einer weiteren Ausgestaltung wird als Rungenhalter ein sich im Wesentlichen in Längsrichtung der Runge erstreckender Metallblock vorgeschlagen, der in Höhe eines oberen Längsabschnitts sowie in Höhe eines tiefer angeordneten Längsabschnitts mit Seitenarmen versehen ist, an deren Rückseiten sich die halterseitigen Formschlussflächen befinden. Dies trägt zu einer kompakten Bauform des Rungenhalters mit geringer vertikaler Bauhöhe bei. Zur Erzielung des gewünschten Formschlusses zwischen Rungenkörper und Rungenhalter reicht bereits ein geringer vertikaler Riegelweg aus, wodurch eine solche Runge auch an Fahrzeugladeböden mit geringer Rahmenhöhe einen ausreichend sicheren und stabilen Halt erhält.

Mit einer weiteren Ausgestaltung wird vorgeschlagen, dass der Keil längsbeweglich in dem Riegel geführt ist und sich unter Federkraft gegen den Riegel abstützt. Der federbelastete Keil führt zu einer spielfreien Verbindung zwischen Rungenkörper und Rungenhalter. Auch nach längerem Einsatz kommt es zu keinem unerwünschten Spiel, verbunden mit einem Schlagen oder Klappern der Runge an dem Rungenhalter oder dem Fahrzeugladeboden.

Mit einer weiteren Ausgestaltung wird vorgeschlagen, dass das Rungendrehlager und der Rungenhalter zwar unterschiedliche, jedoch miteinander verbundene Bauteile sind. Zum Beispiel kann das Rungendrehlager unten in den Rungenhalter eingehängt sein. Diese Bauweise ermöglicht die Verwendung ein- und desselben Rungenhalters auch bei anderen Rungentypen und insbesondere bei solchen Rungen, welche nach ihrer Entriegelung nicht nach unten abklappbar, sondern in Fahrzeuglängsrichtung verschiebbar sind.

Bei der trennbaren Ausgestaltung von Rungenhalter und Rungendrehlager kann es ferner von Vorteil sein, wenn der Rungenhalter durch eine Verschraubung an dem Ladeboden befestigt ist, und diese Verschraubung zugleich auch das Rungendrehlager fahrzeugfest sichert.

Ferner kann eine Ausgestaltung von Vorteil sein, bei der sowohl der Rungenhalter als auch das Rungendrehlager mit jeweils einer Bohrung versehen sind, und eine Schraube oder auch ein Bolzen durch beide Bohrungen zugleich hindurchführt.

Schließlich wird vorgeschlagen, an dem Rungenhalter einen nach außen gerichteten Vorsprung anzuformen, welcher bei verriegelter Runge in eine Öffnung oder Ausnehmung des Rungenkörpers derart hineinragt, dass der Vorsprung den Rungenkörper in vertikaler Richtung blockiert. Der Vorteil dieser Maßnahme besteht darin, dass der Rungenkörper, nachdem dieser einmal verriegelt ist, nicht mehr insgesamt angehoben werden kann.

Ein Ausführungsbeispiel der Erfindung wird im Folgenden anhand der Zeichnungen erläutert. Darin zeigen:
- Figur 1: in teilweiser Seitenansicht den Fahrzeugaufbau eines Nutzfahrzeuges;
- Figur 2: in perspektivischer Darstellung eine Runge des Fahrzeugaufbaus, wobei die Runge in ihrer am Fahrzeug verriegelten Stellung dargestellt ist;
- Figur 3: dieselbe Runge in gelöster und nach außen angewinkelter Stellung;
- Figur 4: das Innere der Runge in ganz entriegelter Stellung;
- Figur 5: das Innere der Runge in teilweise verriegelter Stellung, nämlich ohne Verriegelung der an die Runge angrenzenden Bordwände des Fahrzeugaufbaus;
- Figur 6: das Innere der Runge nach Figur 5, wobei jedoch eine der beiden angrenzenden Bordwände verriegelt ist;
- Figur 7: das Innere der vollständig einschließlich der Bordwände verriegelten Runge;
- Figur 8 a: in perspektivischer Darstellung den unteren Riegel der Runge sowie einen fahrzeugfesten Rungenhalter wobei die Teile in nicht-verriegelter Stellung dargestellt sind;

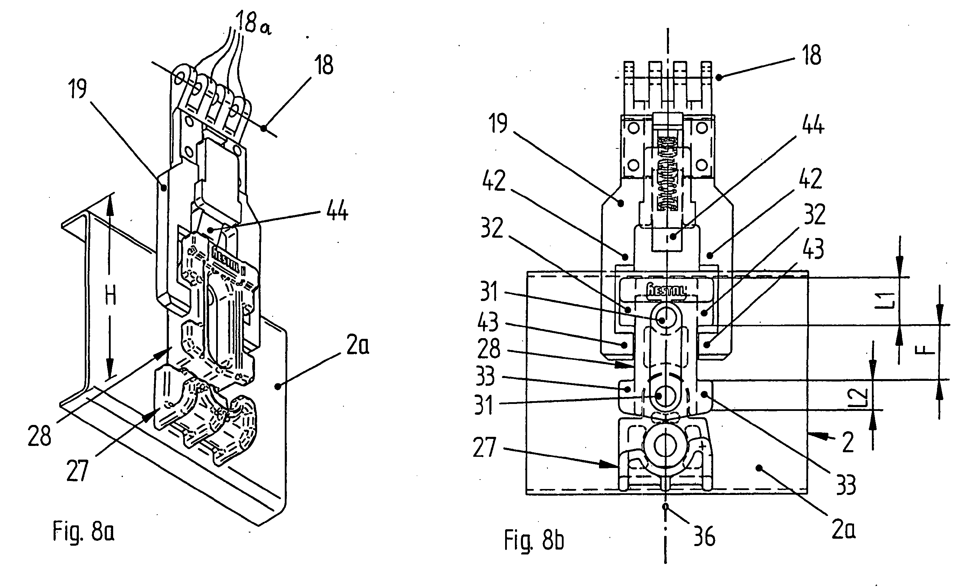

- Figur 8 b: die Gegenstände nach Figur 8 a in einer Ansicht von außen;

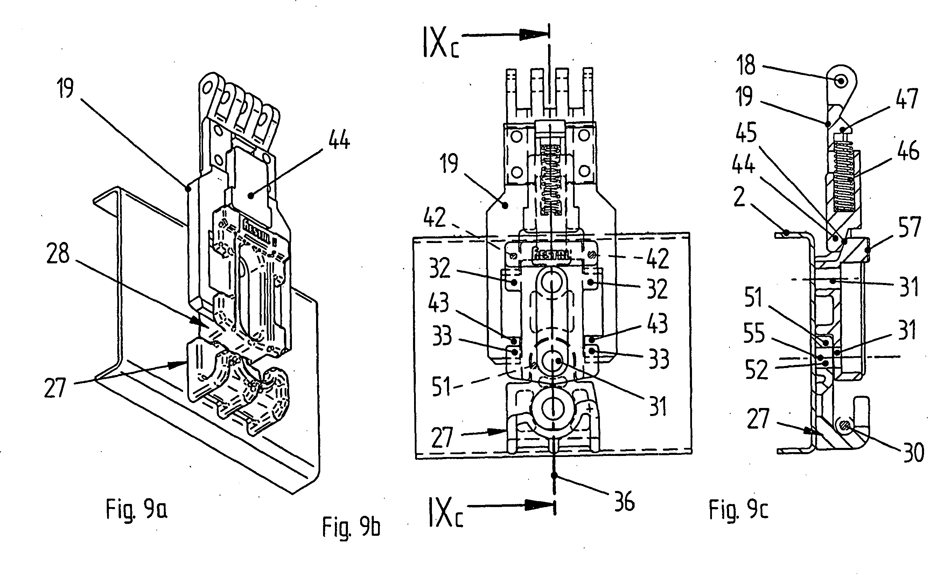

- Figur 9 a: die Gegenstände nach Figur 8 a in teilverriegelter Stellung;
- Figur 9 b: eine Ansicht der Gegenstände nach Figur 9 a;
- Figur 9 c: einen Schnitt in der Schnittebene IXc - Ixc der Figur 9 b;

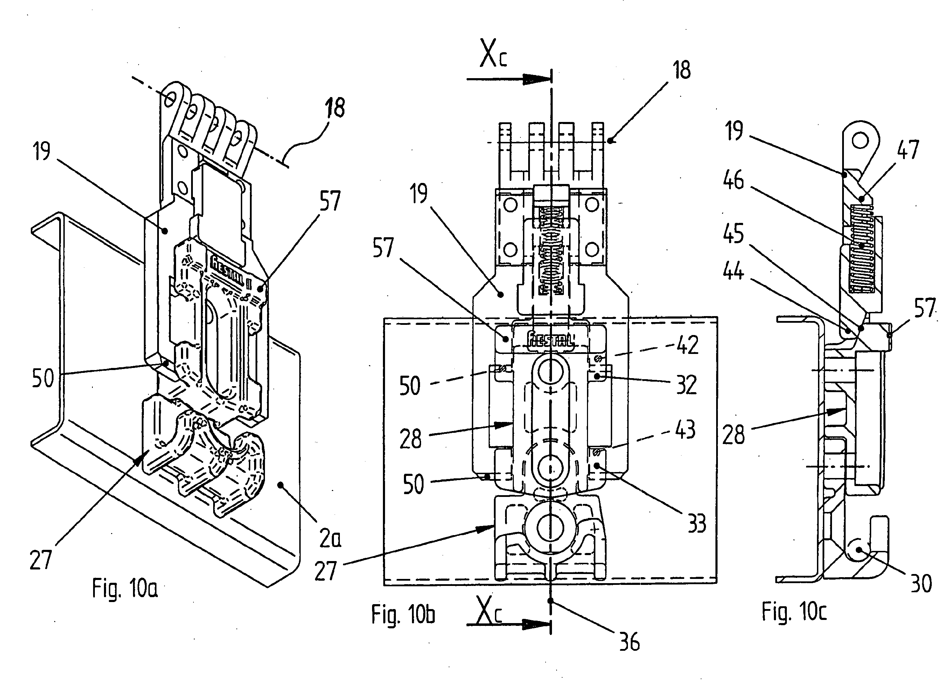

- Figur 10 a: die Gegenstände nach Figur 8 a bei vollständig verriegelter Runge;
- Figur 10 b: eine Ansicht der Gegenstände nach Figur 10 a und
- Figur 10 c: einen Schnitt in der Schnittebene Xc-Xc der Figur 10 b.

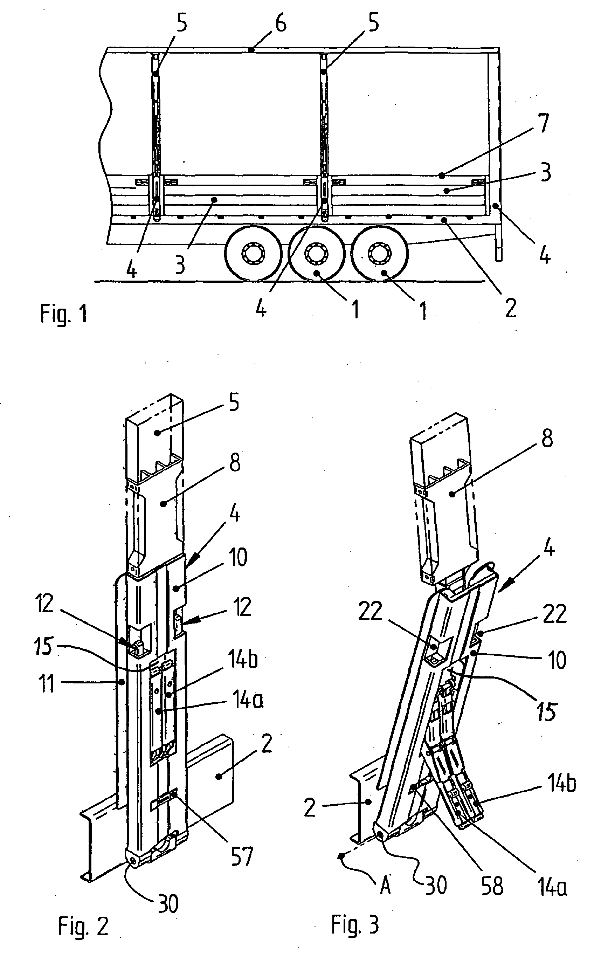

Figur 1 zeigt einen Nutzfahrzeugaufbau, z.B. eines Lkw-Anhängers oder eines Sattelaufliegers. Dargestellt sind die Räder 1 des Fahrzeugs sowie der Ladeboden 2. Am Rahmen des Ladebodens 2 sind Bordwände 3 mittels Scharnieren befestigt. Zum Be- und Entladen des Fahrzeuges lassen sich die Bordwände in üblicher Weise nach unten abklappen. In hoch geklapptem Zustand werden die Bordwände 3 an Rungen 4 verriegelt. Auch die Rungen 4 sind zum Be- und Entladen des Fahrzeugs nach unten abklappbar. Ferner lässt sich jede Runge 4 bei Bedarf aus ihrem Rungendrehlager aushängen, um sie vollständig zu entfernen.

Die Rungen 4 reichen in etwa bis in die Höhe der Oberkanten 7 der Bordwände 3. Nach oben hin sind die Rungen 4 durch Spriegel 5 verlängert, welche bereits Bestandteil der Dachkonstruktion 6 des Fahrzeugaufbaus sind, und diese Dachkonstruktion stützen. Um die einzelne Runge 4 von dem sie nach oben verlängernden Spriegel 5 zu trennen, ist der Spriegel 5 lösbar an der Runge 4 verriegelbar. Hierzu zeigt Figur 2 in einer perspektivischen Darstellung eine Runge mit dem sich nach oben fortsetzenden Spriegel 5 in verriegelter Stellung, wohingegen Figur 3 zeigt, wie Runge 4 und Spriegel 5 zwecks Lösens zueinander anwinkelbar sind. In dieser Stellung lässt sich das untere Ende des Spriegels 5, von dem hier lediglich ein verstärkender Spriegeleinsatz 8 dargestellt ist, aus dem oberen Teil der Runge 4 herausnehmen, um so den Spriegel 5 von der Runge 4 zu trennen. Hierbei verschwenkt die Runge 4, wie dies ebenfalls Figur 3 erkennen lässt, um eine außen am Rahmen des Ladebodens 2 angeordnete Schwenkachse A.

Gemäß den Figuren 2 und 3 verfügt die Runge 4 über einen lang gestreckten Rungenkörper 10, bei dem es sich um ein mit verschiedenen Öffnungen versehenes Metallprofil handelt. Bestandteile des Rungenkörpers 10 sind beidseitig angeordnete Flansche 11. Bei den Flanschen 11 handelt es sich um seitlich überstehende Ränder einer Rückenplatte des Rungenkörpers. Die Flansche 11 bilden Anlageflächen, gegen die die hoch geklappten Bordwände 3 (Figur 1) anliegen. Um die Bordwände in dieser hoch geklappten Stellung zu halten, sind in die Runge 4 Bordwandverriegelungen 12 integriert, worauf später noch eingegangen wird.

In dem Rungenkörper 10 der Runge sind zwei Handhebel 14a, 14b nebeneinander angeordnet. Mit den zwei Handhebeln 14a, 14b werden sämtlich Betätigungsfunktionen betreffend die Runge durchgeführt, nämlich erstens die Verriegelung der Runge an dem Fahrzeugladeboden 2, zweitens die Koppelung von Runge und Spriegel 5 in Strecklage, und drittens die Arretierung der links und rechts an die Runge angrenzenden Bordwände 3. Diese unterschiedlichen Arretier- bzw. Verriegelungsfunktionen sind abhängig von der Stellung der Handhebel 14a, 14b. Hierzu zeigt Figur 2 die beiden Handhebel 14a, 14b in ihrer Schließstellung, und Figur 3 zeigt dieselben Handhebel in maximal geöffneter Stellung.

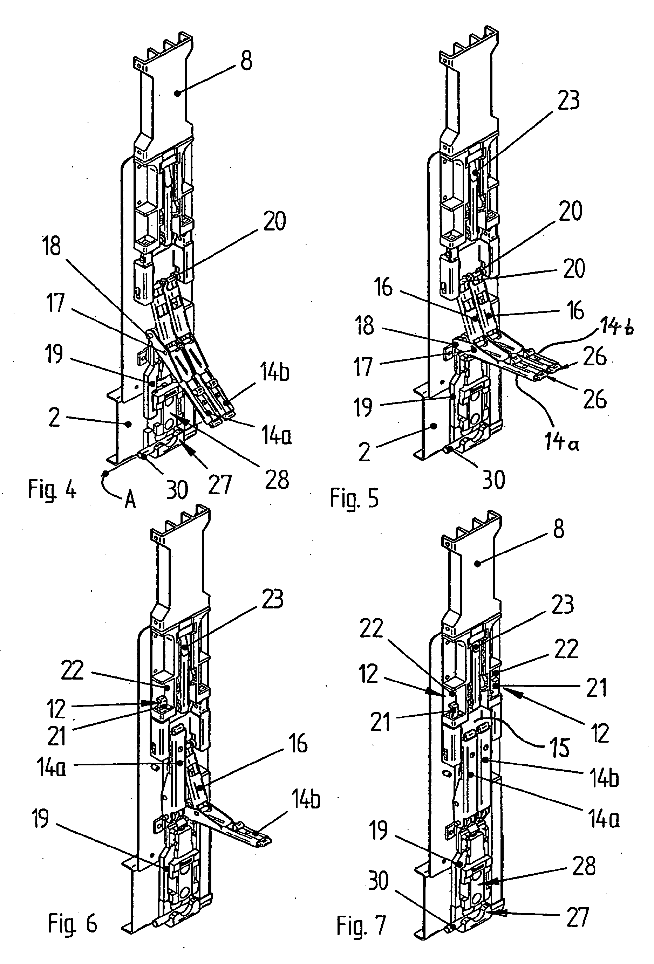

In den Figuren 4 bis 7 sind die verschiedenen Stellungen der Handhebel und die damit einhergehenden Ver- oder Entriegelungen in einzelnen Alternativen bzw. Schritten dargestellt.

Figur 4 zeigt die Handhebel 14a, 14b vollständig geöffnet. Die Runge 4 lässt sich um die Schwenkachse A, welche sich am tiefsten Punkt der Runge befindet, nach unten abklappen. Dargestellt ist sie jedoch in ihrer hochgeklappten Stellung. Die Verriegelung nach oben zu dem Spriegel 5 hin ist inaktiv, ebenso wenig sind die beidseitig anstoßenden Bordwände (in Figur 4 nicht dargestellt) arretiert.

Bei Figur 5 sind die Handhebel 14a, 14b teilweise eingeschwenkt. Über die zwei Hebelgelenke 17, 18 führt diese Bewegung zu einer Bewegung eines in dem Rungenkörper 10 längsgeführten Riegels 19 nach unten. Dies führt, wie später noch im Einzelnen erläutert wird, zur Verriegelung des Rungenkörpers am Ladeboden 2. Das Gelenk 18 verbindet den Riegel 19 mit dem jeweiligen Handhebel 14a, 14b. Auf dem Riegel 19 sind daher nebeneinander zwei dieser Hebelgelenke 18 angeordnet.

Bei Figur 6 ist der Handhebel 14b in derselben Stellung wie bei Figur 5, hingegen ist der Handhebel 14a vollständig zur Runge hin eingeklappt.

Die Führung des Handhebels 14a aus der Stellung nach Figur 5 in die Stellung nach Figur 6 führt mittels eines Hebels 16 mit den beiden Hebelgelenken 17, 20 zu einem Schließen der entsprechenden Bordwandverriegelung 12, hier der oberhalb des linken Handhebels 14a angeordneten Verriegelung für die linke Bordwand. Die Bordwandverriegelung 12 besteht aus einem in dem Rungenkörper 10 längsgeführten Zapfen 21, welcher in eine Ausnehmung 22 des Rungenkörpers 10 einfährt und eine ebenfalls in die Ausnehmung 22 ragende Lasche der jeweiligen Bordwand blockiert.

Analog zu Figur 6 führt ein vollständiges Anklappen des anderen, hier rechten Handhebels 14b zu einer entsprechenden Arretierung der entsprechenden Bordwandverriegelung, d.h. der Verriegelung für die rechts der Runge angeordnete Bordwand.

Bei Figur 7 sind beide Handhebel 14a, 14b vollständig gegen die Runge verschwenkt und damit geschlossen. In dieser Stellung ist daher die Runge an dem Ladeboden 2 verriegelt, ferner sind beide an die Runge angrenzenden Bordwände durch die entsprechenden Zapfen 21 der Bordwandverriegelungen 12 verriegelt, und schließlich ist auch der oberhalb angeordnete Spriegel 5 formschlüssig gegen die Runge 4 verriegelt. Zu diesem Zweck ist der zweite Handhebel 14b gelenkig mit einem zentralen Riegel 23 gekoppelt, welcher Riegel 23 in eine entsprechend gestaltete Ausnehmung des Spriegeleinsatzes 8 von unten her einfahrbar ist. Alternativ ist es auch möglich, den Riegel 23 mit dem anderen Handhebel 14a zu koppeln und durch Anklappen dieses anderen Handhebels 14a von unten her in den Spriegeleinsatz 8 einzufahren.

Beide Handhebel 14a, 14b sind durch Entsperrtasten 26 gesichert. Erst nach Drücken der entsprechenden Entsperrtaste 26 lässt sich der jeweilige Handhebel öffnen und um das auf dem Riegel 19 angeordnete Hebelgelenk 18 nach außen aufklappen. Von besonderem Vorteil ist, dass sich die zwei Handhebel 14a, 14b unmittelbar nebeneinander angeordnet in einer gemeinsamen Öffnung 15 der Außenseite des Rungenkörpers 10 befinden. Zwischen den beiden Handhebeln befindet sich also keine Trennwand, wodurch diese bei Bedarf auch gleichzeitig, z. B. mit nur einer Hand, ergriffen und geöffnet werden können.

Das Hebelgelenk 18 ist in seiner Detailgestaltung noch einmal in den Fign. 8a und 8b dargestellt. Es ist mit insgesamt vier Gelenklaschen 18a so gestaltet, dass es entweder zwei Handhebel 14a, 14b schwenkbar lagern kann, oder auch nur einen einzigen Handhebel. Eine Runge mit einem einzigen Handhebel ist dann ausreichend, wenn die Verriegelung der Bordwände auf andere Weise erfolgt, als mittels der integrierten Bordwandverriegelungen 12.

Anhand der Figuren 8a bis 10c wird im Folgenden die Verbindung der Runge mit dem Ladeboden des Fahrzeugaufbaus erläutert. Den Abschluss des Ladebodens 2 bildet ein Rahmen mit einer vertikalen Stirnfläche 2a und einer Rahmenhöhe H. Unten an der Stirnfläche 2a ist ein Rungendrehlager 27 befestigt. Oberhalb des Rungendrehlagers 27 ist, ebenfalls am Rahmen der Bordwand, ein Rungenhalter 28 befestigt. In der hier beschriebenen Ausführungsform sind Rungendrehlager 27 und Rungenhalter 28 getrennte Bauteile. Prinzipiell ist es jedoch möglich, die Funktionen beider Bauteile in einem einzigen, d. h. einstückigen Bauteil zu verwirklichen.

Das Rungendrehlager 27 weist eine nach oben offene Schale und insbesondere Halbschale auf. Darin drehbar gelagert ist ein Bolzen 30, der am unteren Ende des Rungenkörpers befestigt ist. Bei entriegelter Runge kann diese daher um den als Schwenkachse A dienenden Bolzen herum nach unten abgesenkt werden, so dass die Runge bei der Be- und Entladetätigkeit nicht stört. Die vollständig abgesenkte Runge hängt dann unter ihrem Eigengewicht in der Halbschale des Rungendrehlagers 27. Bei aufgestellter Runge nimmt allein das Rungendrehlager 27 die vertikalen Stützkräfte der Runge auf, und überträgt diese auf den Rahmen bzw. auf den Ladebodens.

Der oberhalb des Rungendrehlagers 27 in Höhe des Fahrzeugladebodens angeordnete Rungenhalter 28 ist ein Metallblock, welcher mittels zweier übereinander angeordneter Schrauben oder Bolzen an der Stirnfläche 2a des Ladebodens befestigt ist. Zur Hindurchführung der beiden Schrauben ist der Rungenhalter 28 mit zwei Bohrungen 31 versehen, die übereinander angeordnet sind. Zwei entsprechende Bohrungen befinden sich in der dahinter angeordneten Stirnfläche 2a des Rahmens des Ladebodens.

Die Figur 8b zeigt den aus einem Metallblock bestehenden Rungenhalter in einer Draufsicht und lässt insbesondere erkennen, dass dieser in Höhe eines oberen Längsabschnitts L1 sowie in Höhe eines tiefer angeordneten Längsabschnitts L2 auf beiden Seiten, d. h. zu beiden Seiten der vertikalen Längsmittellinie 36, mit Seitenarmen 32 bzw. 33 versehen ist. An deren Rückseiten befinden sich die für die Befestigung der Runge wesentlichen, halterseitigen Formschlussflächen. Zwischen den Seitenarmen 32, 33 derselben Seite befindet sich ein vertikaler Freiraum F. Der Freiraum F ermöglicht während des Anschwenkens oder Wegschwenkens der Runge den Durchtritt von korrespondierenden Formschlussflächen 43 des Riegels 19, vgl. Fig. 8b.

Während der Rungenhalter 28 selbst direkt auf der Stirnfläche 2a des Ladebodenrahmens aufliegt, sind die vier Seitenarme 32, 33 so gestaltet, dass ihre Rückseiten und damit die dort ausgebildeten, halterseitigen Formschlussflächen einen deutlichen horizontalen Abstand zu der Stirnfläche 2a aufweisen. Dieser Abstand ist groß genug, um dort beim Verriegeln und Entriegeln eine ungehinderte vertikale Bewegung der Formschlusselemente des Riegels 19 zuzulassen. Der Riegel 19 ist, wie ebenfalls Figur 8b erkennen lässt, nach unten hin gabelförmig gestaltet. An der Gabel sind nach innen zu der Längsmittellinie 36 der Runge hin vorspringende Bereiche ausgebildet. Dort befinden sich die vier riegelseitigen Formschlussflächen 42, 43.

Während die Figuren 8a, 8b die Endriegelungsstellung der Runge zeigen, zeigen die Figuren 9a bis 9c eine erste Verriegelungsstellung. Der Riegel 19 ist hier, betätigt durch die Handhebel 14a, 14b, abgesenkt. Dies führt dazu, dass die zwei Formschlussflächen 42 des Riegels 19 hinter die zwei oberen Seitenarme 32 des Rungenhalters, und die zwei Formschlussflächen 43 des Riegels 19 hinter die zwei unteren Seitenarme 33 des Rungenhalters gelangen. Die zumindest teilweise Überdeckung der beteiligten Formschlussflächen an insgesamt vier Orten bewirkt die sichere Verriegelung der Runge am Rungenhalter. Diese Verriegelung ist, bezogen auf den einzigen möglichen Freiheitsgrad der Runge (durch Verschwenken um die Achse A) formschlüssig. Zu ihrer Verwirklichung reicht bereits ein geringer vertikaler Verriegelungsweg aus.

Zugleich gelangt, wie Figur 9c erkennen lässt, ein schräg angeschnittener Keil 44, welcher ebenfalls Bestandteil der Rungenverriegelung ist, hinter eine korrespondierende Schräge 45 an dem Rungenhalter 28. Die an dem Keil 44 ausgebildete Schräge weist vorzugsweise denselben Winkel auf, wie die Schräge 45 an dem Rungenhalter. Sowohl Keil 44 wie auch Schräge 45 sind auf der Längsmittellinie 36 der Runge angeordnet und damit auch mittig zu dem Riegel 19.

Der Keil 44 ist bei der hier beschriebenen Ausführungsform längsbeweglich in dem Riegel 19 geführt, wozu der Riegel 19 mit einer entsprechenden Schwalbenschwanzführung versehen ist. Von oben her ist der Keil 44 durch die Kraft einer Druckfeder 46 beaufschlagt. Diese sitzt mit ihrem einen Ende in einer Sackbohrung des Keils 44. Mit ihrem anderen Ende stützt sich die Druckfeder 46 gegen eine Fläche 47 des Riegels 19 ab. Die Feder 46 ist daher bestrebt, den Keil 44 nach unten hin und damit gegen die Schräge 45 zu beaufschlagen. Dies führt zu einem federnden Anliegen des Keils 44 an der Schräge 45, wodurch bei normalen Belastungen Relativbewegungen zwischen Runge und Rungenhalter ausgeschlossen sind und die Runge insbesondere nicht schwingen oder klappern kann.

Bein einer anderen, hier allerdings nicht gezeichneten Ausführungsform stützt sich die den Keil 44 elastisch beaufschlagende Feder 46 nicht gegen die Fläche 47 an dem Riegel ab, sondern direkt gegen den Rungenkörper oder eine Fläche des Rungenkörpers. Ferner können weitere Federn vorgesehen sein, welche den Riegel 19 selbst mit einer nach unten, d. h. zu dem Rungenhalter hin wirkenden Federkraft beaufschlagen.

Die Figuren 10a bis 10c zeigen die Endposition der Verriegelung. Der Riegel 19 ist noch etwas mehr abgesenkt, so dass die an dem Riegel 19 einerseits und dem Rungenhalter 28 andererseits angeformten Formschlussflächen 32, 42, 33, 43 sich größtmöglich überdecken. Zugleich kommt es zu einem elastischen Stauchen mit erhöhter Kraftwirkung der Druckfeder 46, da der bereits vorher vollständig an der Schräge 45 abgestützte Keil 44 dieser zusätzlichen Absenkbewegung des Riegels nicht mehr folgen kann und daher eine erhöhte Spannkraft auf die Schräge 45 ausübt.

Alle Formschlussflächen an der Rückseite der Seitenarme 32, 33 und der Außenseite des gabelförmigen Riegels 19 sind eben gestaltet und erstrecken sich in Richtung der Längsbeweglichkeit des Riegels 19. Zur Erzielung einer möglichst spielfreien Verriegelung sollten die vier Formschlusspaare 42, 32; 43, 33 spielfrei oder nahezu spielfrei aneinander vorbeilaufen. Um Widerstände beim Aufeinandertreffen der Formschlusspaare zu vermeiden, können die in Bewegungsrichtung vorne liegenden Kanten Einführschrägen 50 aufweisen.

Von Vorteil ist, dass vor allem die zwei durch die Rückseiten der Seitenarme 33 und die Flächen 43 gebildeten Formschlusspaare deutlich tiefer angeordnet sind, als die Schräge 45 und der Keil 44. Dies führt zu einer Aufteilung der von der Runge abgeführten Kräfte auf mehrere, in unterschiedlichen Höhen angeordnete Abstützorte, und damit zu einer nicht nur sicheren, sondern auch stabilen Verriegelung der Runge an dem Ladeboden. Zusätzlich verhindert der federbelastete Keil 44 ein durch zuviel Spiel verursachtes Schlagen oder Klappern der Runge. Der Riegel 19 muss zwischen seiner in den Figuren 8a und 8b dargestellten Freigabestellung und seiner in den Figuren 10a bis 10c dargestellten Sperrstellung nur einen geringen vertikalen Riegelweg zurücklegen. Dies ist insbesondere von Vorteil, wenn an dem Ladeboden für die Unterbringung der Rungenverriegelung nur eine geringe Höhe H (Figur 8a) zur Verfügung steht.

Von Vorteil ist schließlich, dass Rungenhalter 28 und Rungendrehlager 27 zwar verschiedene Bauteile sind, die sich jedoch gemeinsam an der Stirnfläche 2a des Ladebodens befestigen lassen. Hierzu ist der Rungenhalter 28 an seinem unteren Ende mit einer Ausnehmung versehen, in die ein an dem Rungendrehlager 27 ausgebildeter Vorsprung 51 von unten her einführbar ist. Ist dies geschehen, so befindet sich eine in dem Vorsprung 51 ausgebildete Bohrung 52 in Fluchtung, d.h. koaxial, zu der unteren Bohrung 31 des Rungenhalters 28. Durch die so zueinander fluchtenden Bohrungen 31, 52 lässt sich eine Schraube oder ein Bolzen hindurchführen, um so beide Bauteile zugleich am Rahmen zu sichern. In Figur 9c ist eine derartige Schraube oder ein derartiger Bolzen durch seine Mittelachse 55 bezeichnet.

An dem Rungenhalter 28 ist ein nach außen gerichteter Vorsprung 57 angeformt (Figuren 10a bis 10c). Dieser ragt bei verriegelter Runge in eine Öffnung oder Ausnehmung 58 des Rungenkörpers 10 derart hinein, dass der Vorsprung 57 den Rungenkörper 10 in vertikaler Richtung blockiert. Die Runge ist daher in ihrer verriegelten Position nicht anhebbar.

### Bezugszeichenliste

- 1: Rad
- 2: Ladeboden
- 2a: Stirnfläche
- 3: Bordwand
- 4: Runge
- 5: Spriegel
- 6: Dachkonstruktion des Fahrzeugs
- 7: Oberkante der Bordwand
- 8: Spriegeleinsatz
- 10: Rungenkörper
- 11: Flansch
- 12: Bordwandverriegelung
- 14a: Handhebel
- 14b: Handhebel
- 15: Öffnung
- 16: Hebel
- 17: Gelenk
- 18: Gelenk
- 19: Riegel
- 20: Gelenk
- 21: Zapfen
- 22: Ausnehmung
- 23: Riegel
- 26: Entsperrtaste
- 27: Rungendrehlager
- 28: Rungenhalter
- 30: Bolzen
- 31: Bohrung
- 32: Seitenarm
- 33: Seitenarm
- 36: Längsmittellinie
- 42: Formschlussfläche
- 43: Formschlussfläche
- 44: Keil
- 45: Schräge
- 46: Feder
- 47: Fläche
- 50: Einführschräge
- 51: Vorsprung
- 52: Bohrung
- 55: Mittelachse
- 57: Vorsprung
- 58: Öffnung, Ausnehmung
- A: Schwenkachse
- F: Freiraum
- H: Rahmenhöhe
- L1: Längsabschnitt
- L2: Längsabschnitt

## Patentansprüche

1. Runge für Nutzfahrzeugaufbauten, mit einem in einem Rungendrehlager (27) verschwenkbaren und auf diese Weise nach unten abklappbaren Rungenkörper (10) sowie mit einem oberhalb des Rungendrehlagers (27) in Höhe des Fahrzeugladebodens (2) befestigten Rungenhalter (28) zum fahrzeugfesten Verriegeln des Rungenkörpers (10), wobei an dem Rungenhalter (28) ein längsbeweglich in dem Rungenkörper (10) geführter Riegel (19) verriegelbar ist, und der Riegel (19) mit einem gegen eine Schräge (45) des Rungenhalters (28) längsbeweglichen Keil (44) versehen ist.
**dadurch gekenzeicht,**
**dass** an dem Riegel (19) und an dem Rungenhalter (28), räumlich getrennt von dem Keil (44) und der Schräge (45), jeweils Formschlussflächen (42, 43; 32, 33) ausgebildet sind, die sich bei verriegelter Runge hintergreifen.

2. Runge nach Anspruch 1,
**dadurch gekennzeichnet,**
**dass** die Formschlussflächen (43, 33) tiefer an dem Riegel (19) und dem Rungenhalter (28) angeordnet sind, als der Keil (44) und die Schräge (45).

3. Runge nach Anspruch 1 oder Anspruch 2,
**dadurch gekennzeichnet,**
**dass** erste Formschlussflächen ausschließlich auf der einen, und zweite Formschlussflächen ausschließlich auf der anderen Seite der Längsmittellinie (36) der Runge angeordnet sind.

4. Runge nach Anspruch 3,
**dadurch gekennzeichnet,**
**dass** der Keil (44) und die Schräge (45) auf der Längsmittellinie (36) angeordnet sind.

5. Runge nach einem der vorangehenden Ansprüche,
**gekennzeichnet durch**
bei verriegelter Runge sich hintergreifende obere Formschlussflächen (42, 32) und bei verriegelter Runge sich hintergreifende untere Formschlussflächen (43, 33), wobei obere und untere Formschlussflächen **durch** vertikale Freiräume (F) räumlich voneinander getrennt sind.

6. Runge nach Anspruch 5,
**dadurch gekennzeichnet,**
**dass** der Rungenhalter (28) ein sich im Wesentlichen in Längsrichtung der Runge erstreckender Metallblock ist, der in Höhe eines oberen Längsabschnitts (L1) sowie in Höhe eines tiefer angeordneten Längsabschnitts (L2) mit Seitenarmen (32, 33) versehen ist, an deren Rückseiten sich die halterseitigen Formschlussflächen befinden

7. Runge nach Anspruch 6,
**dadurch gekennzeichnet,**
**dass** sich zwischen den Seitenarmen (32, 33) derselben Seite ein vertikaler Freiraum (F) befindet.

8. Runge nach einem der vorangehenden Ansprüche,
**dadurch gekennzeichnet,**
**dass** der Keil (44) längsbeweglich in dem Riegel (19) geführt ist und sich unter Federkraft gegen den Riegel (19) abstützt.

9. Runge nach einem der vorangehenden Ansprüche,
**dadurch gekennzeichnet,**
**dass** Rungendrehlager (27) und Rungenhalter (28) getrennte, aber miteinander verbundene Bauteile sind.

10. Runge nach Anspruch 9,
**dadurch gekennzeichnet,**
**dass** das Rungendrehlager (27) in den Rungenhalter (28) eingehängt ist.

11. Runge nach Anspruch 9 oder 10,
**dadurch gekennzeichnet,**
**dass** der Rungenhalter (28) durch eine Verschraubung befestigt ist und die Verschraubung zugleich auch das Rungendrehlager (27) fahrzeugfest sichert.

12. Runge nach einem der Ansprüche 9 bis 11,
**dadurch gekennzeichnet,**
**dass** sowohl der Rungenhalter (28) als auch das Rungendrehlager (27) mit jeweils einer Bohrung (31) bzw. (52) versehen sind, und dass eine Schraube oder ein Bolzen durch beide Bohrungen (31, 52) zugleich hindurchführt.

13. Runge nach einem der vorangehenden Ansprüche,
**dadurch gekennzeichnet,**
**dass** an dem Rungenhalter (28) ein nach außen gerichteter Vorsprung (57) angeformt ist, welcher bei verriegelter Runge in eine Öffnung oder Ausnehmung (58) des Rungenkörpers (10) derart hineinragt, dass der Vorsprung (57) den Rungenkörper (10) in vertikaler Richtung blockiert.

## Claims

1. Stanchion for commercial vehicle superstructures, with a stanchion body (10) pivotable in a stanchion rotary bearing (27) and thereby foldable downwards and with a stanchion holder (28), fastened, level with the vehicle loading floor (2), above the stanchion rotary bearing (27), for locking the stanchion body (10) fixedly with respect to the vehicle, a locking device (19) guided longitudinally movably in the stanchion body (10) being lockable on the stanchion holder (28), and the locking device (19) being provided with a wedge (44) longitudinally movable against a slope (45) of the stanchion holder (28), **characterized in that** form-fit surfaces (42, 43; 32, 33) which engage one behind the other when the stanchion is locked are formed in each case on the locking device (19) and on the stanchion holder (28) separately from the wedge (44) and the slope (45) in spatial terms.

2. Stanchion according to Claim 1, **characterized in that** the form-fit surfaces (43, 33) are arranged on the locking device (19) and the stanchion holder (28) at a lower level than the wedge (44) and the slope (45).

3. Stanchion according to Claim 1 or Claim 2, **characterized in that** first form-fit surfaces are arranged solely on one side of the longitudinal centre line (36) of the stanchion and second form-fit surfaces are arranged solely on its other side.

4. Stanchion according to Claim 3, **characterized in that** the wedge (44) and the slope (45) are arranged on the longitudinal centre line (36).

5. Stanchion according to one of the preceding claims, **characterized by** upper form-fit surfaces (42, 32) engaging one behind the other when the stanchion is locked and by lower form-fit surfaces (43, 33) engaging one behind the other when the stanchion is locked, the upper and lower form-fit surfaces being separated from one another by vertical free spaces (F) in spatial terms.

6. Stanchion according to Claim 5, **characterized in that** the stanchion holder (28) is a metal block which extends essentially in the longitudinal direction of the stanchion and which is provided, level with an upper longitudinal portion (L1) and level with a longitudinal portion (L2) arranged at a lower level, with side arms (32, 33), on the rear sides of which the holder-side form-fit surfaces are located.

7. Stanchion according to Claim 6, **characterized in that** a vertical free space (F) is located between the side arms (32, 33) at the same side.

8. Stanchion according to one of the preceding claims, **characterized in that** the wedge (44) is guided longitudinally movably in the locking device (19) and is supported under spring force against the locking device (19).

9. Stanchion according to one of the preceding claims, **characterized in that** the stanchion rotary bearing (27) and stanchion holder (28) are separate components, which, however, are connected to one another.

10. Stanchion according to Claim 9, **characterized in that** the stanchion rotary bearing (27) is suspended in the stanchion holder (28).

11. Stanchion according to Claim 9 or 10, **characterized in that** the stanchion holder (28) is fastened by means of a screw connection, and the screw connection also at the same time secures the stanchion rotary bearing (27) fixedly with respect to the vehicle.

12. Stanchion according to one of Claims 9 to 11, **characterized in that** the stanchion holder (28) and the stanchion rotary bearing (27) are provided in each case with a bore (31) and (52), and **in that** a screw or a bolt leads through both bores (31, 52) at the same time.

13. Stanchion according to one of the preceding claims, **characterized in that** integrally formed on the stanchion holder (28) is an outwardly directed projection (57) which, when the stanchion is locked, projects into an orifice or recess (58) of the stanchion body (10) in such a way that the projection (57) blocks the stanchion body (10) in the vertical direction.

## Revendications

1. Rancher pour superstructures de véhicule utilitaire, avec un corps de rancher (10) pivotant dans un coussinet de pivotement de rancher (27) et pouvant ainsi être rabattu vers le bas, ainsi qu'avec une bride de rancher (28) fixée au-dessus du coussinet de pivotement de rancher (27) à la hauteur de la plate-forme de chargement de véhicule (2) pour verrouiller le corps de rancher (10) sur le véhicule, dans lequel, sur la bride de rancher (28), un verrou (19) guidé de façon mobile dans le sens longitudinal dans le corps de rancher (10) peut être verrouillé, et le verrou (19) est muni d'une clavette (44) mobile dans le sens longitudinal contre une pente (45) de la bride de rancher (28),
**caractérisé en ce que** sur le verrou (19) et sur la bride de rancher (28), de façon physiquement séparée de la clavette (44) et de la pente (45), respectivement des surfaces à engagement positif (42, 43 ; 32, 33) sont réalisées qui passent les unes derrière les autres lorsque le rancher est verrouillé.

2. Rancher selon la revendication 1, **caractérisé en ce que** les surfaces à engagement positif (43, 33) sont disposées plus bas sur le verrou (19) et la bride de rancher (28) que la clavette (44) et la pente (45).

3. Rancher selon la revendication 1 ou 2, **caractérisé en ce que** des premières surfaces à engagement positif sont disposées exclusivement d'un côté et des deuxièmes surfaces à engagement positif sont disposées exclusivement de l'autre côté de la ligne médiane longitudinale (36) du rancher.

4. Rancher selon la revendication 3, **caractérisé en ce que** la clavette (44) et la pente (45) sont disposées sur la ligne médiane longitudinale (36).

5. Rancher selon l'une quelconque des revendications précédentes, **caractérisé par** des surfaces à engagement positif supérieures (42, 32) passant les unes derrière les autres lorsque le rancher est verrouillé et par des surfaces à engagement positif inférieures (43, 33) passant les unes derrière les autres lorsque le rancher est verrouillé, dans lequel les surfaces à engagement positif supérieures et inférieures sont séparées physiquement par des espacements verticaux (F).

6. Rancher selon la revendication 5, **caractérisé en ce que** la bride de rancher (28) est un bloc métallique s'étendant substantiellement dans la direction longitudinale du rancher et qui est muni à la hauteur d'un segment longitudinal supérieur (L1), ainsi qu'à la hauteur d'un segment longitudinal (L2) disposé plus bas, de bras latéraux (32, 33) sur les faces arrière desquels se trouvent les surfaces à engagement positif côté bride.

7. Rancher selon la revendication 6, **caractérisé en ce qu'**entre les bras latéraux (32, 33) du même côté, il se trouve un espacement (F) vertical.

8. Rancher selon l'une quelconque des revendications précédentes, **caractérisé en ce que** la clavette (44) est guidée dans le rancher (19) de façon mobile dans le sens longitudinal et prend appui sur le verrou (19) sous l'effet d'un ressort.

9. Rancher selon l'une quelconque des revendications précédentes, **caractérisé en ce que** le coussinet de pivotement de rancher (27) et la bride de rancher (28) sont des composants distincts mais reliés ensemble.

10. Rancher selon la revendication 9, **caractérisé en ce que** le coussinet de pivotement de rancher (27) est accroché dans la bride de rancher (28).

11. Rancher selon la revendication 9 ou 10, **caractérisé en ce que** la bride de rancher (28) est fixée par un vissage et le vissage fixe en même temps aussi le coussinet de pivotement de rancher (27) sur le véhicule.

12. Rancher selon l'une quelconque des revendications 9 à 11, **caractérisé en ce qu'**aussi bien la bride de rancher (28) que le coussinet de pivotement de rancher (27) sont munis respectivement d'un alésage (31) ou (52), et **en ce qu'**une vis ou un boulon traverse les deux alésages (31, 52) en même temps.

13. Rancher selon l'une quelconque des revendications précédentes, **caractérisé en ce que** sur la bride de rancher (28), une saillie (57) tournée vers l'extérieur est rapportée qui dépasse dans une ouverture ou un évidement (58) du corps de rancher (10) lorsque le rancher est verrouillé de telle sorte que la saillie (57) bloque le corps de rancher (10) dans la direction verticale.
